# EUROPÄISCHE PATENTSCHRIFT

(11) **EP 2 758 305 B1**
(45) Veröffentlichungstag und Bekanntmachung des Hinweises auf die Patenterteilung: **07.10.2015**
(21) Anmeldenummer: 12742916.5
(22) Anmeldetag: 02.08.2012
(51) Int. Cl.: B64C 27/605, B64C 27/04

(54) **ROTORBLATTSTEUEREINRICHTUNG**
ROTOR BLADE CONTROL DEVICE
DISPOSITIF DE COMMANDE À PALE DE ROTOR

(30) Priorität: 19.09.2011 DE 102011082910
(43) Veröffentlichungstag der Anmeldung: 30.07.2014
(73) Patentinhaber: ZF Friedrichshafen AG, 88038 Friedrichshafen (DE)
(72) Erfinder: ARNOLD, Uwe, 34132 Kassel (DE); WINTJEN, Carsten, 34393 Grebenstein (DE); HAUSBERG, Andre, 34131 Kassel (DE)
(86) Internationale Anmeldenummer: PCT/EP2012/065136
(87) Internationale Veröffentlichungsnummer: WO 2013/041282

(56) Entgegenhaltungen:
- WO-A2-2011/078684
- DE-A1- 10 001 378
- DE-U1-202007 000 987
- FR-A1- 2 917 709
- FR-A1- 2 945 269

## Beschreibung

Die Erfindung betrifft eine Rotorblattsteuereinrichtung für einen Hubschrauber.

Bei einem Hubschrauber treibt eine Rotorwelle einen Rotorkopf an. An dem Rotorkopf sind Rotorblätter sowohl bezüglich ihrer Längsachse drehbar, als auch im Winkel zwischen deren Längsachse und der Drehachse der Rotorwelle schwenkbar angeordnet. Zur Steuerung der Flugbewegungen eines Hubschraubers ist eine Verstellung der Verdrehwinkel der Rotorblätter um ihre Längsachse erforderlich. Dies erfolgt mittels einer Taumelscheibe, welche von der Rotorwelle durchdrungen wird und gegenüber der Rotorwellenachse axial verschiebbar und verkippbar ist.

Die ringförmige Taumelscheibe, nachfolgend als Taumelring bezeichnet, umfasst einen drehfest mit dem Hubschrauber gekoppelten ringförmigen Teil, nachfolgend als nichtdrehender Teil des Taumelrings bezeichnet, und eine an diesem drehbar um deren gemeinsame Mittelachse gelagerten und drehfest mit der Rotorwelle gekoppelten ringförmigen Teil, nachfolgend als drehender Teil des Taumelrings bezeichnet. Der nichtdrehende Teil des Taumelrings ist beispielsweise durch ein sphärisches Lager gelagert, welches eine Verkippung zulässt, und ist parallel, bzw. koaxial zur Rotorwellenachse verschiebbar.

Der drehende Teil des Taumelrings ist über ein Mitnehmergestänge drehfest mit der Rotorwelle gekoppelt und läuft somit mit der Drehzahl der Rotorwelle um. Zur Verstellung der Rotorblätter wirken Aktuatoren auf den nichtdrehenden Teil des Taumelrings und verschieben diesen längs der Rotorwellenachse bzw. Verkippen diesen der Rotorwellenachse gegenüber, wobei sich diese Bewegungen je nach auszuführendem Flugmanöver auch überlagern können. Durch die drehbare Lagerung zwischen dem nichtdrehenden Teil des Taumelrings und dem drehenden Teil des Taumelrings werden diese Bewegungen auf den drehenden Teil des Taumelrings übertragen. Mittels der Verstellelemente, wie beispielsweise Steuerstangen, zwischen dem drehenden Teil des Taumelrings und den Rotorblättern werden diese Bewegungen in die gewünschten Bewegungen der Rotorblätter umgewandelt.

Die Aktuatoren werden üblicherweise hydraulisch betätigt, allerdings finden aufgrund von Nachteilen der hydraulischen Aktuatoren, wie beispielsweise zusätzliches Gewicht, Möglichkeit von Leckagen, hohen Wartungskosten sowie Brandgefahr und Toxizität zunehmend elektromechanische Aktuatoren Verwendung.

Aus der EP 2 155 553 B1, die als nächlstliegendes Stand der Technik angesehen wird, ist eine Hubschrauber-Rotorblattsteuerungsvorrichtung bekannt, welche einen Taumelring aufweist, die einen nichtdrehenden Teil des Taumelrings, d.h. eine sich nicht relativ zum Hubschrauber drehende ringförmige Platte, und einen drehenden Teil des Taumelrings umfasst. Der drehende Teil des Taumelrings ist koaxial zu dem drehfest mit dem Gehäuse bzw. dem Hubschrauber verbundenen nichtdrehenden Teil des Taumelrings angeordnet und dreht sich um eine gemeinsame Mittelachse beider Teile des Taumelrings. Zudem ist der drehende Teil des Taumelrings axial und radial an dem nichtdrehenden Teil des Taumelrings gelagert.

Die Verschiebung bzw. die Verkippung des nichtdrehenden Teil des Taumelrings wird hierbei von drei elektromechanischen Aktuatoren erzeugt, die mit drei gleichmäßig um den Umfang des ringförmigen nichtdrehenden Teils des Taumelrings angeordneten seitlichen, stangenartigen Verlängerungen des nichtdrehenden Teils des Taumelrings wirkverbunden sind. Die Verlängerungen sind ausgehend vom nichtdrehenden Teil des Taumelrings radial nach Außen gerichtet. Jeder Aktuator weist einen um eine Drehachse einer Steuerwelle des Aktuators schwenkbaren Hebel auf, welcher mittels eines Gleitelements mit der seitlichen Verlängerung des nichtdrehenden Teils des Taumelrings eine Gleitverbindung bildet. Die Hebel der jeweiligen Aktuatoren sind unabhängig von einander je nach gewünschter Verkippung oder Verschiebung des nichtdrehenden Teils des Taumelrings um einen bestimmten Verstellwinkel verschwenkbar. So nimmt für jeden Verstellwinkel der Steuerwellen bzw. der Hebel die zugehörige Anschlussstelle am nichtdrehenden Teil des Taumelrings einen exakt definierten Punkt im Raum ein. Auf ein sphärisches Lager zur Führung des nichtdrehenden Teils des Taumelrings kann damit verzichtet werden. Eine gesonderte axiale Führung des Taumelrings kann entfallen. Da der nichtdrehende Teil des Taumelrings mittels der Hebel, des Gleitelements und der Verlängerung mit dem Hubschrauber gekoppelt ist, sind keine Elemente, die ein Mitdrehen des nichtdrehenden Teils des Taumelrings verhindern sollen, erforderlich.

Die stangenartigen, sich radial nach außen vom nichtdrehenden Teil des Taumelrings erstreckenden seitlichen Verlängerungen und die damit radial außerhalb dessen angeordneten Aktuatoren beanspruchen nachteiligerweise einen großen radialen Bauraum. Das Koppelmittel zwischen Aktuator und nichtdrehendem Teil des Taumelrings ist mit zwei Bauteilen, nämlich dem Hebel und dem Gleitelement, aufwändig aufgebaut. Zudem erfordern die Gleit- und Gelenkverbindungen zwischen den Aktuatoren und den Verlängerungen einen hohen Wartungsaufwand, wie beispielsweise die Schmierung der gleitenden Teile sowie die Kontrolle des Schmierungszustandes der Gleitoberflächen. Darüber hinaus können sich die Spiele an den Gleit- und Gelenkverbindungen addieren, wodurch die Präzision der Verstellung beeinträchtigt wird.

Die der Erfindung zugrunde liegende Aufgabe ist es, in einfacher Weise eine wartungsarme Rotorblattsteuerungsvorrichtung mit möglichst geringem Bauraumbedarf und reduzierter Teilevielfalt zu schaffen.

Diese Aufgabe wird durch die Merkmale des Patentanspruches 1 gelöst.

Hierbei weist eine Rotorblattsteuereinrichtung für einen Hubschrauber einen Taumelring auf, welcher einen ringförmigen nichtdrehenden Teil, einen ringförmigen drehenden Teil, mindestens drei um eine Rotorwellenachse des Hubschraubers angeordnete Aktuatoren und ein Koppelglied zwischen jedem Aktuator und dem nichtdrehenden Teil des Taumelrings umfasst. Die Aktuatoren sind mit einer an dem Hubschrauber fest angeordneten ortsfesten Komponente gekoppelt, wobei der Aktuator eine von diesem um eine Steuerachse verdrehbare Steuerwelle aufweist. Unter einer ortsfesten Komponente ist hierbei ein Bauteil zu verstehen, das fest mit dem Hubschrauber bzw. der Struktur des Hubschraubers verbunden ist. Der koaxial zum nichtdrehenden Teil des Taumelrings angeordnete drehende Teil des Taumelrings ist drehbar an dem nichtdrehenden Teil des Taumelrings gelagert, welcher aufgrund seiner Koppelung mit dem Aktuator und damit dem Hubschrauber drehfest mit diesem verbunden und nicht um die Rotorwellenachse drehbar ist. Das Koppelglied ist in einem auf der Steuerachse liegenden ersten Koppelpunkt drehfest mit der Steuerwelle verbunden und nicht axial längs der Steuerachse verschiebbar, so dass das Koppelglied und die Steuerwelle mit dem Aktuator ein Drehgelenk bilden. Das Koppelglied ist in einem zweiten Koppelpunkt beweglich mit dem nichtdrehenden Teil des Taumelrings gekoppelt, so dass durch die Verdrehung der Steuerwelle die zweite Koppelstelle am nichtdrehenden Teil des Taumelrings über das Koppelglied zumindest längs der Rotorwellenachse verschoben wird. Die Steuerwellen der jeweiligen Aktuatoren sind unabhängig voneinander je nach gewünschter Verkippung oder Verschiebung des nichtdrehenden Teils des Taumelrings um einen bestimmten Verstellwinkel verdrehbar, so dass für jeden Verstellwinkel der Steuerwellen der zugehörige zweite Koppelpunkt am nichtdrehenden Teil des Taumelrings einen exakt definierten Punkt im Raum einnimmt. Hierbei ist das Koppelglied starr ausgebildet und die Aktuatoren sind um eine jeweilige Schwenkachse schwenkbar an der ortsfesten Komponente angeordnet. Das Koppelglied ist um den zweiten Koppelpunkt in alle Richtungen schwenkbar. Der erste Koppelpunkt ist radial von der Schwenkachse beabstandet. Die Steuerachse und die Schwenkachse sind in ihrer Lage zueinander derart angeordnet, dass sich der radiale Abstand des ersten Koppelpunkts von der Rotorwellenachse durch eine Schwenkbewegung des Aktuators verändert.

Vorteilhafterweise sind der erste und der zweite Koppelpunkt direkt durch nur ein Bauteil, nämlich dem in sich starren Koppelglied, miteinander gekoppelt. Dies hat zum einen Vorteile hinsichtlich der Teilezahl beim Koppelglied. Zudem ist aufgrund des nur einen Gelenks im zweiten Koppelpunkt, welches zudem nur Schwenk- und keine Gleitbewegungen zulässt, der Wartungsaufwand minimal.

Vorteilhafte Ausgestaltungen der Erfindung ergeben sich aus den Unteransprüchen.

In einer vorteilhaften Ausgestaltung ist die Schwenkachse parallel zur Rotorwellenachse angeordnet und die Steuerachse in einer vertikalen Ebene senkrecht zur Ausrichtung der Rotorwellenachse angeordnet und radial von dieser beabstandet.

In diesem Zusammenhang ist es möglich, dass die Steuerachse und die Schwenkachse senkrecht zueinander angeordnet sind und in einer Ebene liegend einen gemeinsamen Schnittpunkt aufweisen.

Vorteilhafterweise ist die Erfindung so ausgestaltet, dass die Aktuatoren und das Koppelglied radial innerhalb des nichtdrehenden Teils des Taumelrings angeordnet sind. Hierdurch wird der auf die Rotorwellenachse bezogene radiale beanspruchte Bauraum der Rotorblattsteuereinrichtung minimal.

In einer bevorzugten Ausgestaltung ist das Koppelmittel einstückig als Hebel ausgebildet. Hierdurch weist das Koppelmittel in sich eine besonders hohe Steifigkeit auf, so dass dessen Durchbiegung bei der Übertragung der Verstellkraft vom Aktuator zum nichtdrehenden Teil des Taumelrings minimal ist. Zudem wird durch die einstückige Ausbildung die Teilevielfalt verringert und Montagevorgänge vermieden bzw. vereinfacht.

Es ist möglich, dass zwischen dem Hebel und dem nichtdrehenden Teil des Taumelrings in dem zweiten Koppelpunkt ein Kugelgelenk ausgebildet ist.

In einer Ausgestaltung der Erfindung sind die Aktuatoren als Elektromotoren ausgebildet.

Alternativ hierzu können die Aktuatoren als hydraulische Schwenkmotoren ausgebildet sein.

Bevorzugt weisen die Aktuatoren eine innere Redundanz auf.

Vorteilhafterweise ist es möglich, dass ein Hubschrauber eine erfindungsgemäße Rotorblattsteuereinrichtung aufweist.

Ein Ausführungsbeispiel der Erfindung ist in der Zeichnung dargestellt und wird im Folgenden näher beschrieben.

Es zeigen:
- Fig. 1: eine perspektivische Ansicht der erfindungsgemäßen Rotorblattsteuereinrichtung und
- Fig. 2: eine Draufsicht auf die erfindungsgemäße Rotorblattsteuereinrichtung.

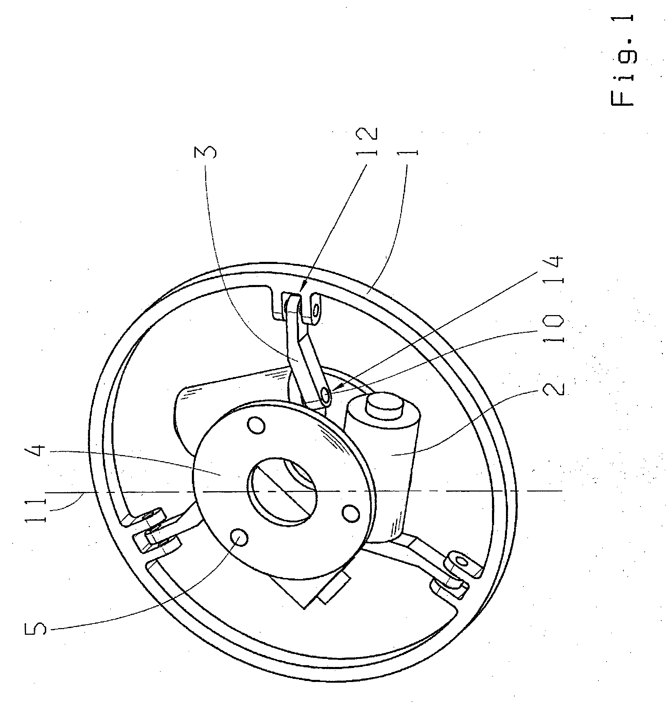

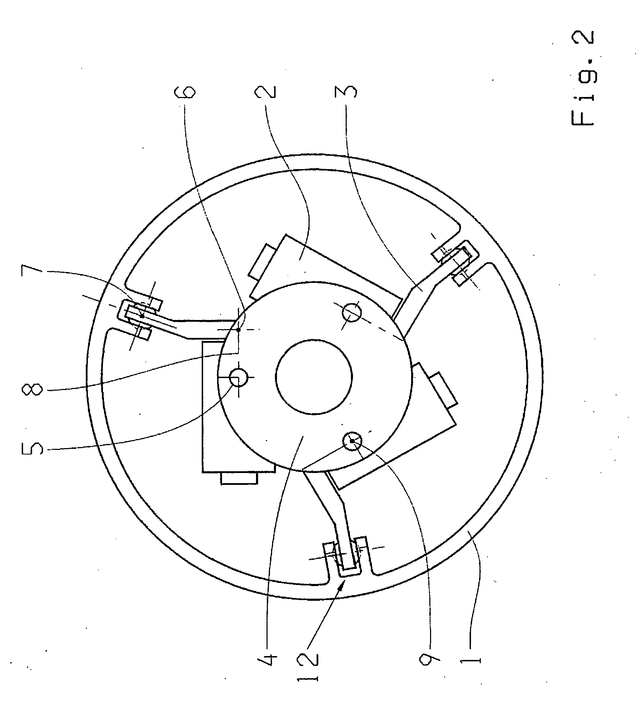

Fig. 1 zeigt eine vereinfachte perspektivische Darstellung einer erfindungsgemäßen Rotorblattsteuereinrichtung in Einbaulage. Die Rotorblattsteuereinrichtung umfasst einen Taumelring und eine Aktuatorik zu deren Verstellung. Von dem einen drehenden Teil und einen nichtdrehenden Teil umfassenden Taumelring ist nur der nichtdrehende Teil des Taumelrings 1 dargestellt, an welchem der drehende Teil des Taumelrings um die gemeinsame Mittelachse drehbar gelagert ist. Nicht zur Rotorblattsteuereinrichtung gehört eine ortsfeste Komponente 4, worunter hier ein Bauteil des Gesamtsystems Hubschrauber zu verstehen ist, welches relativ zu der Struktur des Hubschraubers feststehend, bzw. fest mit dieser verbunden ist. In einem zentralen Durchlass der ortsfesten Komponente 4 ist eine nicht dargestellte Rotorwelle angeordnet, welche von einem nicht dargestellten Antriebsmotor angetrieben sich um eine Rotorwellenachse 11 dreht. Die Rotorwellenachse 11 verläuft in Einbaulage, bzw. in einem stehenden Hubschrauber im Wesentlichen vertikal. An der ortsfesten Komponente 4 sind drei Aktuatoren 2 jeweils um eine Schwenkwelle 5 bzw. eine Schwenkachse 9 (siehe Fig. 2), verschwenkbar angeordnet. Die drei Aktuatoren 2 und die damit gekoppelten Elemente sind gleich. Im vorliegenden Beispiel sind die Aktuatoren 2 als elektromechanische Aktuatoren ausgebildet sind, welche um eine Steuerachse 8 (siehe Fig. 2) elektromagnetisch verdrehbare Steuerwellen 10 aufweisen. Die elektromechanischen Aktuatoren können beispielsweise als elektrische Schrittmotoren ausgebildet sein, mit welchen es möglich ist, die Steuerwelle 10 um einen Verstellwinkel zu verdrehen. Alternativ hierzu wären auch hydraulische Aktuatoren, beispielsweise hydraulische Schwenkmotoren, einsetzbar. Ein als Hebel 3 ausgebildetes Koppelglied ist in einem auf der Steuerachse 8 liegenden ersten Koppelpunkt 6 drehfest mit der Steuerwelle 10 verbunden und axial auf dieser festgelegt, so dass das Koppelglied und die Steuerwelle mit dem Aktuator ein Drehgelenk 14 bilden. Damit kann der in diesem Beispiel einstückig ausgestaltete und in sich starre Hebel 3 mittels des Aktuators 2 gemeinsam mit der Steuerwelle 10 um einen bestimmten Verstellwinkel verdreht werden. Der Hebel 3 ist in einem zweiten Koppelpunkt 7 in alle Richtungen gelenkig mit dem nichtdrehenden Teil des Taumelrings 1 gekoppelt und in allen Richtungen um den zweiten Koppelpunkt 7 schwenkbar. In dem zweiten Koppelpunkt 7 ist zwischen dem Hebel 3 und dem nichtdrehenden Teil des Taumelrings 1 ein Kugelgelenk 12 ausgebildet. Der zweite Koppelpunkt 7 ist damit der Gelenkpunkt des Kugelgelenks 12.

Somit bestimmt der Verstellwinkel der Steuerwelle 10 bzw. des Hebels 3 die axiale Position des zweiten Koppelpunkts 7 und damit die Position des nichtdrehenden Teils des Taumelrings 1 bezogen auf die Rotorwellenachse 11. Die Verdrehung der einzelnen Steuerwellen 10 der jeweiligen Aktuatoren 2 erfolgt unabhängig voneinander.

Fig. 2 zeigt in einer vereinfachten Darstellung die erfindungsgemäße Rotorblattsteuereinrichtung in der Draufsicht, d.h. in der Einbaulage von oben. Hierbei ist die Lage der Schwenkachse 9 des Aktuators 2 und der Steuerachse 8 der Steuerwelle 10 bzw. des Hebels 3 dargestellt. Die Schwenkachse 9 ist, wie auch aus Fig. 1 zu ersehen, parallel zur Rotorwellenachse 11 angeordnet. Die Steuerachse 8 verläuft in einer senkrechten Projektionsebene im rechten Winkel zur Rotorwellenachse 11, d.h. wenn die Rotorwellenachse 11 vertikal ausgerichtet ist, ist die Lage der Steuerachse 8 horizontal. Ausgehend von der Rotorwellenachse 11 ist die Steuerachse 8 in radialer Richtung von dieser beabstandet. Des Weiteren ist der erste Koppelpunkt 6, an welcher der Hebel 3 drehfest mit der Steuerwelle 10 verbunden ist, radial von der Schwenkachse 9 beabstandet. Die Steuerachse 8 und die Schwenkachse 9 liegen in einer gemeinsamen vertikalen Ebene und schneiden sich.

In einer Rotorblattsteuereinrichtung eines Hubschraubers ist an dem nichtdrehenden Teil des Taumelrings 1 der um die Mittelachse des nichtdrehenden Teils des Taumelrings 1 mit der Drehzahl der Rotorwelle rotierende nicht dargestellte drehende Teil des Taumelrings in axialer und radialer Richtung gelagert. Durch eine reine Verschiebung des nichtdrehenden Teils des Taumelrings 1 längs der Rotorwellenachse 11, d.h. die Mittelachse des nichtdrehenden Teil des Taumelrings 1 stimmt mit der Rotorwellenachse 11 überein, werden die Rotorblätter über mit dem drehenden Teil des Taumelrings gekoppelte Verstellelemente einheitlich um den gleichen Winkel um ihre Längsachse verdreht. Je weiter der nichtdrehende Teil des Taumelrings 1 ausgehend von einer Lage minimaler Rotorblattverdrehung axial verschoben wird, umso größer ist die Rotorblattverdrehung. Dies bedeutet auch, dass während einer Rotorumdrehung die Rotorblattverdrehung eines Rotorblatts gleich bleibt. Um diese Lage einzustellen, müssen alle Aktuatoren 2 die Hebel 3 um den gleichen Verstellwinkel verdrehen. Sollen sich der Verdrehwinkel der Rotorblätter während einer Rotorumdrehung ändern, so muss der nichtdrehende Teil des Taumelrings 1 und damit der Taumelring gegenüber der Rotorwellenachse 11 verkippt werden, so dass die Mittelachse des nichtdrehenden Teils des Taumelrings 1 und die Rotorwellenachse 11 zueinander geneigt sind. Hierzu müssen die Verstellwinkel der Aktuatoren 2 unterschiedlich sein. Ebenso kann durch eine Verschiebung des nichtdrehenden Teils des Taumelrings 1 bzw. des Taumelrings längs der Rotorwellenachse die Neigung der Rotorblätter zur Rotorwellenachse verändert werden.

Die Funktion der gezeigten Rotorblattsteuereinrichtung soll an dem folgenden Beispiel erläutert werden. Der Ausgangszustand der Rotorblattsteuereinrichtung ist wie in Fig. 1 und 2 dargestellt, d.h. alle Aktuatoren 2 stellen jeweils den gleichen Steuerwinkel derart ein, dass alle Hebel 3, bzw. die Koppelpunkte 6 und 7 in einer Ebene, auf der die Rotorwellenachse 11 senkrecht steht, liegen. Die Aktuatoren 2 sind in eine Position verschwenkt, in welcher die ersten Koppelpunkte 6 der Hebel 3 den geringsten radialen Abstand zur Rotorwellenachse 11 im gesamten Verstellbereich der Aktuatoren 2 aufweisen. Soll nun der nichtdrehende Teil des Taumelrings 1 insgesamt längs der Rotorwellenachse 11 verschoben werden, verdrehen alle Aktuatoren 2 die Hebel 3 um den gleichen Verstellwinkel, beispielsweise nach oben. Der zweite Koppelpunkt 7, und damit das Kugelgelenk, bewegt sich bei dieser Verstellung auf einem Kreisradius um die Steuerachse 8, wodurch es sich bei einer starren Befestigung der Aktuatoren 2 an der ortsfesten Komponente 4 radial der Rotorwellenachse 11 nähern würde, was jedoch aufgrund der Koppelung mit dem nichtdrehenden Teil des Taumelrings 1 nicht möglich wäre.

Der Hebel 3 kann verdreht und der zweite Koppelpunkt 7 kann parallel zur Rotorwellenachse 11 verschoben werden, weil sich durch die Schwenkbarkeit des Aktuators 2 um die Schwenkachse 9 der Abstand zwischen dem ersten Koppelpunkt 6 und der Rotorwellenachse 11 vergrößert und somit der Abstand zwischen dem zweiten Koppelpunkt 7 und der Rotorwellenachse 11 gleich bleibt. Wäre der zweite Koppelpunkt 7 nun als ein einfaches nur in einer Ebene wirkendes Gelenk ausgebildet, würde sich der Hebel 3 seitlich verspannen bzw. verbiegen. Aus diesem Grunde ist der zweite Koppelpunkt 7 als Kugelgelenk ausgebildet, dessen Freiheitsgrade die Verlagerung des ersten Koppelpunkts 6 kompensieren.

Dieser Mechanismus arbeitet analog bei einer Verkippung des nichtdrehenden Teils des Taumelrings und damit des Taumelrings, wobei jedoch in einem solchen Falle von Aktuatoren unterschiedliche Verstellwinkel eingestellt werden müssen. Eine Verkippung kann auch je nach dem auszuführenden Flugmanöver mit einer insgesamten Verschiebung des nichtdrehenden Teil des Taumelrings und damit des Taumelrings längs der Rotorwellenachse 11 überlagert werden.

### Bezugszeichen

- 1: nichtdrehender Teil des Taumelrings
- 2: Aktuator
- 3: Koppelglied, Hebel
- 4: ortsfeste Komponente
- 5: Schwenkwelle
- 6: Koppelpunkt
- 7: Koppelpunkt
- 8: Steuerachse
- 9: Schwenkachse
- 10: Steuerwelle
- 11: Rotorwellenachse
- 12: Kugelgelenk
- 14: Drehgelenk

## Patentansprüche

1. Rotorblattsteuereinrichtung für einen Hubschrauber, umfassend einen Taumelring, der Taumelring umfassend einen nichtdrehenden Teil des Taumelrings (1), einen drehenden Teil des Taumelrings, mindestens drei um eine Rotorwellenachse (11) des Hubschraubers angeordnete Aktuatoren (2), einem Koppelglied (3) zwischen Aktuator (2) und nichtdrehendem Teil des Taumelrings (1), wobei der koaxial zum nichtdrehenden Teil des Taumelrings (1) angeordnete drehende Teil des Taumelrings drehbar an diesem gelagert ist, wobei die Aktuatoren (2) mit einer relativ zu dem Hubschrauber fest angeordneten ortsfesten Komponente (4) verbunden sind, wobei der Aktuator (2) eine von diesem um eine Steuerachse (8) verdrehbare Steuerwelle (10) aufweist, und wobei das Koppelglied (3) in einem auf der Steuerachse (8) liegenden ersten Koppelpunkt (6) drehfest mit der Steuerwelle (10) verbunden ist und in einem zweiten Koppelpunkt (7) beweglich mit dem nichtdrehenden Teil des Taumelrings (1) gekoppelt ist, so dass durch die Verdrehung der Steuerwelle (10) der zweite Koppelpunkt (7) am nichtdrehenden Teil des Taumelrings (1) über das Koppelglied (3) zumindest längs der Rotorwellenachse (11) verschoben wird, wobei die Steuerwellen (10) der jeweiligen Aktuatoren (2) unabhängig von einander je nach gewünschter Verkippung oder Verschiebung des nichtdrehenden Teils des Taumelrings (1) um einen bestimmten Verstellwinkel verdrehbar sind, so dass für jeden Verstellwinkel der Steuerwellen (10) der zugehörige zweite Koppelpunkt (7) am nichtdrehenden Teil des Taumelrings (1) einen exakt definierten Punkt im Raum einnimmt, **dadurch gekennzeichnet, dass** das um den zweiten Koppelpunkt (7) in alle Richtungen schwenkbare Koppelglied (3) starr ausgebildet ist und die Aktuatoren (2) um eine jeweilige Schwenkachse (9) schwenkbar an der ortsfesten Komponente (4) angeordnet sind, und dass der erste Koppelpunkt (6) radial von der Schwenkachse (9) ausgehend beabstandet ist, wobei die Steuerachse (8) und die Schwenkachse (9) in ihrer Lage zueinander derart angeordnet sind, dass sich der radiale Abstand des ersten Koppelpunkts (6) von der Rotorwellenachse (11) durch eine Schwenkbewegung des Aktuators (2) um die Schwenkachse (9) verändert.

2. Rotorblattsteuereinrichtung nach Anspruch 1, **dadurch gekennzeichnet, dass** die Schwenkachse (9) parallel zur Rotorwellenachse (11) angeordnet ist und die Steuerachse (8) in einer vertikalen Ebene senkrecht zur Ausrichtung der Rotorwellenachse (11) angeordnet und radial von dieser beabstandet ist.

3. Rotorblattsteuereinrichtung nach Anspruch 2, **dadurch gekennzeichnet, dass** die Steuerachse (8) und die Schwenkachse (9) senkrecht zueinander angeordnet sind und in einer Ebene liegend einen gemeinsamen Schnittpunkt aufweisen.

4. Rotorblattsteuereinrichtung nach einem der vorangegangenen Ansprüche, **dadurch gekennzeichnet, dass** die Aktuatoren (2) und das Koppelglied (3) radial innerhalb des nichtdrehenden Teils des Taumelrings (1) angeordnet sind.

5. Rotorblattsteuereinrichtung nach einem der vorangegangenen Ansprüche, **dadurch gekennzeichnet, dass** das Koppelmittel (3) einstückig als Hebel ausgebildet ist.

6. Rotorblattsteuereinrichtung nach einem der vorangegangenen Ansprüche, **dadurch gekennzeichnet, dass** zwischen dem Hebel (3) und dem nichtdrehenden Teil des Taumelrings (1) in dem zweiten Koppelpunkt (7) ein Kugelgelenk (12) ausgebildet ist.

7. Rotorblattsteuereinrichtung nach einem der vorangegangenen Ansprüche, **dadurch gekennzeichnet, dass** die Aktuatoren (2) als Elektromotoren ausgebildet sind.

8. Rotorblattsteuereinrichtung nach einem der Ansprüche 1 bis 6, **dadurch gekennzeichnet, dass** die Aktuatoren (2) als hydraulische Schwenkmotoren ausgebildet sind.

9. Rotorblattsteuereinrichtung nach Anspruch 7 oder 8, **dadurch gekennzeichnet, dass** die Aktuatoren (2) eine innere Redundanz aufweisen.

10. Hubschrauber mit einer Rotorblattsteuereinrichtung nach Anspruch 1.

## Claims

1. Rotor blade control device for a helicopter, comprising a swashplate, the swashplate comprising a non-rotating part of the swashplate (1), a rotating part of the swashplate, at least three actuators (2) arranged about a rotor shaft axis (11) of the helicopter, a coupling member (3) between the actuator (2) and the non-rotating part of the swashplate (1), wherein the rotating part of the swashplate, arranged coaxially with the non-rotating part of the swashplate (1), is mounted rotatably thereon, wherein the actuators (2) are connected to a positionally fixed component (4) that is arranged fixed with respect to the helicopter, wherein the actuator (2) has a control shaft (10) that can be rotated thereby about a control axis (8), and wherein the coupling member (3) is connected in a rotationally fixed manner to the control shaft (10) at a first coupling point (6) that lies on the control axis (8) and is coupled in a movable manner to the non-rotating part of the swashplate (1) at a second coupling point (7), such that, as a consequence of the rotation of the control shaft (10), the second coupling point (7) on the non-rotating part of the swashplate (1) is displaced by means of the coupling member (3) at least along the rotor shaft axis (11), wherein the control shafts (10) of the respective actuators (2) can be rotated, independently of one another, by a determined displacement angle depending on the desired tilting or displacement of the non-rotating part of the swashplate (1), such that, for every displacement angle of the control shafts (10), the associated second coupling point (7) on the non-rotating part of the swashplate (1) adopts an exactly defined point in space, **characterized in that** the coupling member (3) which can be pivoted in all directions about the second coupling point (7) is rigid and the actuators (2) are arranged on the positionally fixed component (4) so as to be able to pivot about a respective pivot axis (9), and **in that** the first coupling point (6) is radially spaced apart proceeding from the pivot axis (9), wherein the control axis (8) and the pivot axis (9) are arranged with respect to one another in their position such that the radial separation between the first coupling point (6) and the rotor shaft axis (11) changes as a consequence of a pivot motion of the actuator (2) about the pivot axis (9).

2. Rotor blade control device according to Claim 1, **characterized in that** the pivot axis (9) is arranged parallel to the rotor shaft axis (11) and the control axis (8) is arranged in a vertical plane that is perpendicular to the orientation of the rotor shaft axis (11) and is radially spaced apart therefrom.

3. Rotor blade control device according to Claim 2, **characterized in that** the control axis (8) and the pivot axis (9) are arranged perpendicular to one another and, in one plane, have a common point of intersection.

4. Rotor blade control device according to one of the preceding claims, **characterized in that** the actuators (2) and the coupling member (3) are arranged radially inside the non-rotating part of the swashplate (1).

5. Rotor blade control device according to one of the preceding claims, **characterized in that** the coupling member (3) is formed in one piece as a lever.

6. Rotor blade control device according to one of the preceding claims, **characterized in that** between the lever (3) and the non-rotating part of the swashplate (1) there is formed, at the second coupling point (7), a ball joint (12).

7. Rotor blade control device according to one of the preceding claims, **characterized in that** the actuators (2) take the form of electric motors.

8. Rotor blade control device according to one of Claims 1 to 6, **characterized in that** the actuators (2) take the form of hydraulic oscillating motors.

9. Rotor blade control device according to Claim 7 or 8, **characterized in that** the actuators (2) have an internal redundancy.

10. Helicopter having a rotor blade control device according to Claim 1.

## Revendications

1. Dispositif de commande des pales de rotor pour un hélicoptère, comprenant un anneau en nutation, l'anneau en nutation comprenant une partie non en rotation de l'anneau en nutation (1), une partie en rotation de l'anneau en nutation, au moins trois actionneurs (2) disposés autour d'un axe d'arbre de rotor (11) de l'hélicoptère, un élément de couplage (3) entre un actionneur (2) et la partie non en rotation de l'anneau en nutation (1), la partie en rotation de l'anneau en nutation qui est disposée de manière coaxiale par rapport à la partie non en rotation de l'anneau en nutation (1) étant montée rotative sur celui-ci, les actionneurs (2) étant reliés à un composant (4) en position fixe disposé fixement par rapport à l'hélicoptère, l'actionneur (2) possédant un arbre de commande (10) qui peut être tourné par celui-ci autour d'un axe de commande (8), et l'élément de couplage (3) étant relié en rotation solidaire avec l'arbre de commande (10) en un premier point de couplage (6) qui se trouve sur l'axe de commande (8) et étant couplé en un deuxième point de couplage (7) de manière mobile avec la partie non en rotation de l'anneau en nutation (1), de sorte que la rotation de l'arbre de commande (10) provoque un décalage du deuxième point de couplage (7) sur la partie non en rotation de l'anneau en nutation (1) par le biais de l'élément de couplage (3) au moins le long de l'axe d'arbre de rotor (11), les arbres de commande (10) des actionneurs (2) respectifs pouvant être tournés indépendamment les uns des autres d'un angle de positionnement donné en fonction du basculement ou du décalage souhaité de la partie non en rotation de l'anneau en nutation (1), de sorte que pour chaque angle de positionnement des arbres de commande (10), le deuxième point de couplage (7) associé sur la partie non en rotation de l'anneau en nutation (1) occupe un point défini avec précision dans l'espace, **caractérisé en ce que** l'élément de couplage (3) qui peut pivoter dans toutes les directions autour du deuxième point de couplage (7) est de configuration rigide et les actionneurs (2) sont disposés sur le composant (4) en position fixe de manière à pouvoir pivoter autour d'un axe de pivotement (9) correspondant, et **en ce que** le premier point de couplage (6) est espacé dans le sens radial en partant de l'axe de pivotement (9), l'axe de commande (8) et l'axe de pivotement (9) étant positionnés de telle sorte l'un par rapport à l'autre que la distance radiale entre le premier point de couplage (6) et l'axe d'arbre de rotor (11) est modifiée par un mouvement de pivotement de l'actionneur (2) autour de l'axe de pivotement (9).

2. Dispositif de commande des pales de rotor selon la revendication 1, **caractérisé en ce que** l'axe de pivotement (9) est disposé parallèlement à l'axe d'arbre de rotor (11) et l'axe de commande (8) est disposé dans un plan vertical perpendiculaire à l'orientation de l'axe d'arbre de rotor (11) et espacé de celui-ci dans le sens radial.

3. Dispositif de commande des pales de rotor selon la revendication 2, **caractérisé en ce que** l'axe de commande (8) et l'axe de pivotement (9) sont disposés perpendiculairement l'un à l'autre et possèdent un point d'intersection commun se trouvant dans un plan.

4. Dispositif de commande des pales de rotor selon l'une des revendications précédentes, **caractérisé en ce que** les actionneurs (2) et l'élément de couplage (3) sont disposés dans le sens radial à l'intérieur de la partie non en rotation de l'anneau en nutation (1).

5. Dispositif de commande des pales de rotor selon l'une des revendications précédentes, **caractérisé en ce que** le moyen de couplage (3) est réalisé d'une seule pièce sous la forme d'un levier.

6. Dispositif de commande des pales de rotor selon l'une des revendications précédentes, **caractérisé en ce qu'**entre le levier (3) et la partie non en rotation de l'anneau en nutation (1), une articulation à rotule (12) est formée en le deuxième point de couplage (7).

7. Dispositif de commande des pales de rotor selon l'une des revendications précédentes, **caractérisé en ce que** les actionneurs (2) sont réalisés sous la forme de moteurs électriques.

8. Dispositif de commande des pales de rotor selon l'une des revendications 1 à 6, **caractérisé en ce que** les actionneurs (2) sont réalisés sous la forme de moteurs pivotants hydrauliques.

9. Dispositif de commande des pales de rotor selon la revendication 7 ou 8, **caractérisé en ce que** les actionneurs (2) possèdent une redondance interne.

10. Hélicoptère équipé d'un dispositif de commande des pales de rotor selon la revendication 1.
